# EUROPEAN PATENT APPLICATION

(11) **EP 4 796 893 A1**
(43) Date of publication of application: **26.08.2026**
(21) Application number: 26157795.1
(22) Date of filing: 11.02.2026
(51) Int. Cl.: G01B 7/06, G01B 11/02

(54) **MEASUREMENT DEVICE, MEASUREMENT APPARATUS, AND MEASUREMENT METHOD**

(30) Priority: 19.02.2025 JP 2025024975
(71) Applicant: Yokogawa Electric Corporation, Musashino-shi, Tokyo 180-8750 (JP)
(72) Inventor: CHIDA, Naomichi, Musashino-shi, Tokyo 180-8750 (JP); ICHIZAWA, Yasushi, Musashino-shi, Tokyo 180-8750 (JP)
(74) Representative: Winter, Brandl - Partnerschaft mbB

(57) **Abstract**

A measurement device is the measurement device that measures a thickness of a covering layer included in a measurement target object with respect to a measurement axis direction, and that includes a first measurer which electromagnetically measures a first distance between the first end surface and a top surface of a base material with respect to the measurement axis direction, a second measurer which electromagnetically measures a second distance between the second end surface and the top surface of the base material with respect to the measurement axis direction, and a third measurer which optically measures a third distance between the third end surface and a top surface of the covering layer with respect to the measurement axis direction, wherein, in a direction perpendicular to the measurement axis direction, the first end portion, the second end portion, and the third end portion are arranged adjacent to each other.

## Description

### BACKGROUND OF THE DISCLOSURE

### 1. Field of the Disclosure

The present disclosure relates to a measurement device, a measurement apparatus, and a measurement method.

### 2. Description of the Related Art

There is a known sensor system for measuring, as a measurement target object, a thickness of a covering layer that is formed on a top surface of a base material (Japanese Patent No. 7203961). This sensor system includes an optical displacement sensor that is a laser displacement sensor with a triangulation type (laser triangulation sensor) or a color confocal displacement sensor, and an eddy current displacement sensor, and is constituted such that the measurement axis of the optical displacement sensor and the measurement axis of the eddy current displacement sensor match each other. In this sensor system, the thickness of the covering layer is measured by calculating a difference between a measurement value obtained by the optical displacement sensor that measures a distance to a top surface of the covering layer, and a measurement value obtained by the eddy current displacement sensor that measures a distance to the top surface of the base material.

Patent Document 2: Japanese Laid-open Patent Publication No. 2007-113980
In the above described sensor system, in a case where the measurement target object is inclined with respect to the measurement axis for measuring the thickness of the covering material, that is, in a case where the top surface of the covering layer is not perpendicular to the measurement axis, the sensor system has a problem in that an error between the top surface of the covering layer and the measurement axis in accordance with an angle of inclination occurs in the measurement value of the thickness of the covering layer.

Accordingly, the disclosed technology has been conceived in light of the circumstances described above, and an object thereof is to provide a measurement device, a measurement apparatus, and a measurement method capable of increasing measurement accuracy of a thickness of a measurement target object.

### SUMMARY OF THE DISCLOSURE

In one aspect of the disclosed embodiment, a measurement device that measures, with respect to a measurement axis direction, a thickness of a covering layer that is included in a measurement target object and that is formed on a top surface of a base material, the measurement device comprising: a first measurer which is provided with a first end portion having a first end surface as a first measurement reference position, and which electromagnetically measures a first distance between the first end surface and the top surface of the base material with respect to the measurement axis direction; a second measurer which is provided with a second end portion having a second end surface as a second measurement reference position, and which electromagnetically measures a second distance between the second end surface and the top surface of the base material with respect to the measurement axis direction; and a third measurer which is provided with a third end portion having a third end surface as a third measurement reference position, and which optically measures a third distance between the third end surface and a top surface of the covering layer with respect to the measurement axis direction, wherein in a direction perpendicular to the measurement axis direction, the first end portion, the second end portion, and the third end portion are arranged adjacent to each other.

### ADVANTAGEOUS EFFECTS OF DISCLOSURE

According to one aspect of an embodiment of the measurement device disclosed in the present application, it is possible to increase the measurement accuracy of the thickness of the measurement target object.

### BRIEF DESCRIPTION OF THE DRAWINGS

FIG. 1 is a perspective view schematically illustrating a measurement device according to a first embodiment;
FIG. 2 is a plan view schematically illustrating a first end surface, a second end surface, and a third end surface provided in the measurement device according to the first embodiment;
FIG. 3 is a schematic side view for explaining a problem in a case where a thickness direction of the measurement target object is inclined with respect to the measurement axis direction;
FIG. 4 is a schematic diagram for explaining an arithmetic operation of a thickness of a covering layer provided in the measurement device according to the first embodiment;
FIG. 5 is a plan view for explaining a relevant part of each eddy current displacement sensor according to the first embodiment;
FIG. 6 is a plan view of a modification of the relevant part of each of the eddy current displacement sensors according to the first embodiment;
FIG. 7 is a plan view of another modification of the relevant part of each of the eddy current displacement sensors according to the first embodiment;
FIG. 8 is a graph illustrating a relationship between a drive frequency and a depth of an eddy current that is generated by the eddy current displacement sensor provided in the measurement device according to the first embodiment;
FIG. 9 is a perspective view of a measurement apparatus that includes the measurement device according to the first embodiment;
FIG. 10 is a plan view schematically illustrating a first end surface, a second end surface, a third end surface, and a fourth end surface provided in a measurement device according to a second embodiment; and
FIG. 11 is a plan view schematically illustrating a first end surface, a second end surface, and a third end surface provided in a measurement device according to a third embodiment.

### DETAILED DESCRIPTION OF THE PREFERRED EMBODIMENTS

Hereinafter, preferred embodiments of a measurement device, a measurement apparatus, and a measurement method disclosed in the present application, will be described in detail below with reference to the accompanying drawings. Furthermore, the measurement device, the measurement apparatus, and the measurement method disclosed in the present application are not limited by the embodiments described below.

### First Embodiment

### Measurement device

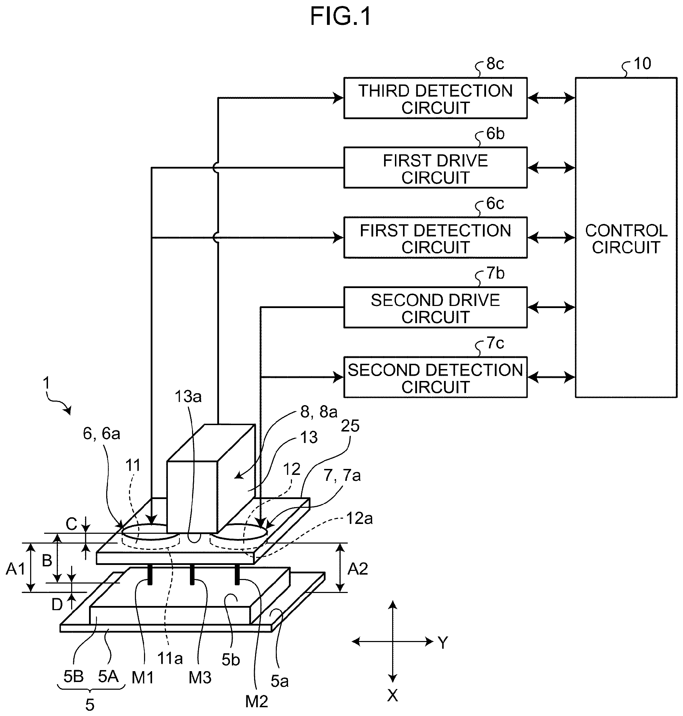

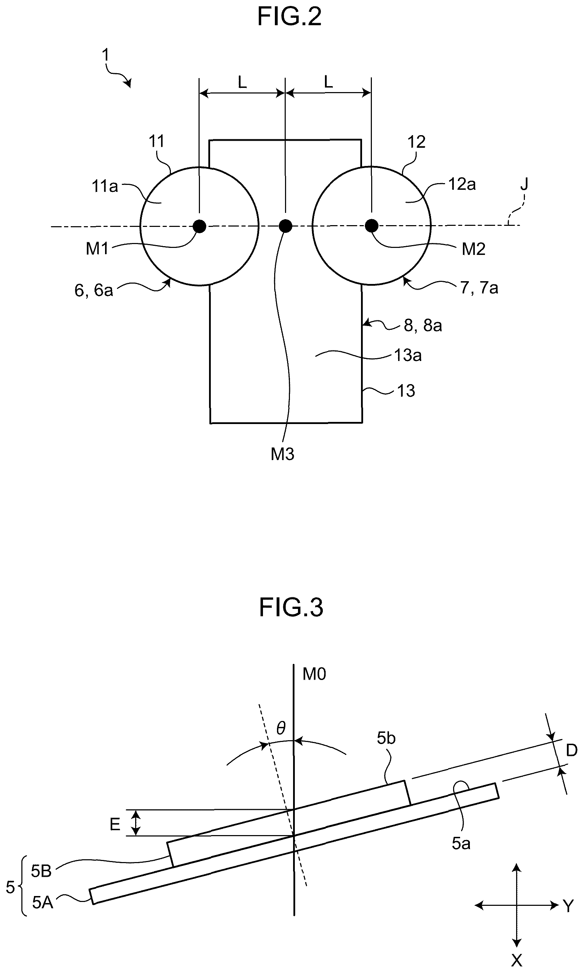

FIG. 1 is a perspective view schematically illustrating a measurement device according to a first embodiment. FIG. 2 is a plan view schematically illustrating a first end surface, a second end surface, and a third end surface provided in a measurement device 1 according to the first embodiment.

As illustrated in FIG. 1, a measurement device 1 according to the first embodiment measures a thickness of a covering layer 5B that is included in a measurement target object 5 and that is formed on a top surface 5a of a base material 5A with respect to a measurement axis direction X. One example of the measurement target object 5, whose thickness is measured by the measurement device 1 according to the first embodiment, includes an electrode sheet for a battery, and the thickness of a coated film of an active substance as the covering layer 5B, which is formed on the top surface of a metal foil as the base material 5A, is to be measured. In this case, the thickness of the metal foil is about a few micrometers [µm] to 20 [µm], and the thickness of the coated film is about 50 [µm] to 500 [µm]. The coated film of the active substance slightly has a conductive property, but a value of the electrical conductivity of the coated film is about six orders of magnitude smaller than a value of the electrical conductivity of the metal foil, so that it is possible to ignore the electrical conductivity of the coated film in an electromagnetic measurement of the metal foil. Furthermore, the coated film does not have optical transparency, and is formed in an opaque manner.

In addition, an example of the measurement target object 5 is not limited to electrodes, the measurement device 1 may also be applied to a measurement of the thickness of the covering layer 5B, which is formed on the base material 5A having a value of the electrical conductivity that is about six orders of magnitude higher than the value of the electrical conductivity of the covering layer 5B. For example, the measurement device 1 may also be applied to a measurement of the thickness of the coated film that is formed on the top surface of a steel plate.

As illustrated in FIG. 1 and FIG. 2, the measurement device 1 according to the first embodiment includes a first measurer 6 which is provided with a first end portion 11 having a first end surface 11a as a first measurement reference position, and which electromagnetically measures a first distance A1 between the first end surface 11a and the top surface (upper surface) 5a of the base material 5A with respect to a measurement axis direction X, and a second measurer 7 which is provided with a second end portion 12 having a second end surface 12a as a second measurement reference position, and which electromagnetically measures a second distance A2 between the second end surface 12a and the top surface 5a of the base material 5A with respect to the measurement axis direction X. In addition, the measurement device 1 includes a third measurer 8 which is provided with a third end portion 13 having a third end surface 13a as a third measurement reference position, and which optically measures a third distance B between the third end surface 13a and a top surface (upper surface) 5b of the covering layer 5B with respect to the measurement axis direction X.

The measurement device 1 is constituted such that a measurement technique is different between a measurement technique of the first measurer 6 and the second measurer 7, and a measurement technique of the third measurer 8, and detects a thickness D of the covering layer 5B on the basis of an arithmetic operation related to each of the first distance A1 that is a measurement value measured by the first measurer 6, and the second distance A2 that is a measurement value measured by the second measurer 7, and an arithmetic operation related to the third distance B that is a measurement value measured by the third measurer 8. Furthermore, when the measurement device 1 performs the arithmetic operation related to the thickness D of the covering layer 5B, the measurement device 1 corrects an error that occurs caused by an inclination of the top surface 5a of the base material 5A with respect to a direction Y that is perpendicular to the measurement axis direction X, on the basis of the arithmetic operation related to the first distance A1 that is the measurement value measured by the first measurer 6, and the arithmetic operation related to the second distance A2 that is the measurement value measured by the second measurer 7. The measurement axis direction X is a direction parallel to the thickness direction of the measurement target object 5, and is a direction orthogonal to the top surface 5a of the base material 5A and the top surface 5b of the covering layer 5B.

In the measurement device 1, the first end surface 11a of the first end portion 11, the second end surface 12a of the second end portion 12, and the third end surface 13a of a third end portion 13 are arranged adjacent to each other in the direction Y perpendicular to the measurement axis direction X. In the present disclosure, the structure, in which the first end surface 11a, the second end surface 12a, and the third end surface 13a are arranged adjacent to each other, indicates a structure, in which the first end surface 11a, the second end surface 12a, and the third end surface 13a are arranged so as to be close to each other, including a structure, in which at least a part of the first end surface 11a, the second end surface 12a, and the third end surface 13a overlaps when viewed from the measurement axis direction X.

In the first embodiment, in the direction Y perpendicular to the measurement axis direction X, a third measurement axis M3 of the third measurer 8 is arranged at the center between a first measurement axis M1 of the first measurer 6 and a second measurement axis M2 of the second measurer 7. Furthermore, the first measurement axis M1, the second measurement axis M2, and the third measurement axis M3 are arranged on a same straight line J along the direction Y perpendicular to the measurement axis direction X. On the straight line J, a distance L between the first measurement axis M1 and the third measurement axis M3, and the distance L between the second measurement axis M2 and the third measurement axis M3, are set to equal. By arranging the first measurement axis M1, and the second measurement axis M2, the third measurement axis M3 in this way, it is possible to simplify the arithmetic expression of the thickness D of the covering layer 5B.

Furthermore, in the first embodiment, as one example, the first end surface 11a and the second end surface 12a are provided to be located on the same plane that is perpendicular to the measurement axis direction X. The third end surface 13a is located at the position above the positions of the first end surface 11a and the second end surface 12a, that is, located at the position opposite side of the first end surface 11a and the second end surface 12a from the measurement target object 5. The position of each of the first end surface 11a and the second end surface 12a with respect to the measurement axis direction X, is not limited to this structure, but, in terms of increasing the measurement accuracy, it is desirable that the first end surface 11a, the second end surface 12a, and the third end surface 13a are arranged in the vicinity of the measurement axis direction X.

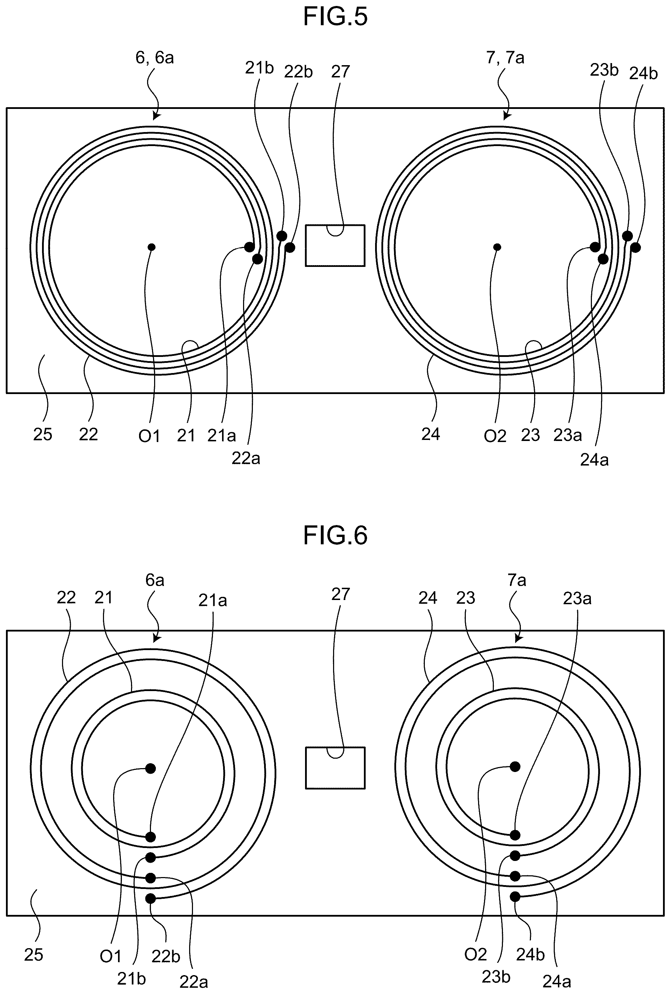

The first measurer 6 includes an eddy current displacement sensor as a first electromagnetic sensor 6a. The first electromagnetic sensor 6a includes a first drive coil 21 that generates an eddy current on the top surface 5a of the base material 5A, and a first detection coil 22 that detects the eddy current generated by the first drive coil 21 (see FIG. 5). Furthermore, the first measurer 6 includes a first drive circuit 6b, which is high frequency transmission circuit that flows a high frequency current to the first drive coil 21 that is provided in the first electromagnetic sensor 6a, and a first detection circuit 6c, which detects the first distance A1 on the basis of the detection result obtained by the first detection coil 22 that is provided in the first electromagnetic sensor 6a. Furthermore, in the first embodiment, as the first electromagnetic sensor 6a and a second electromagnetic sensor 7a, the eddy current displacement sensors are used, but, for example, a capacitance displacement sensor (not illustrated) may also be used.

The first drive coil 21 is electrically connected to the first drive circuit 6b. The first detection coil 22 is electrically connected to the first detection circuit 6c. Both of the first drive coil 21 and the first detection coil 22 are formed on a circuit board 25 that will be described later.

The second measurer 7 includes, similarly to the first measurer 6, an eddy current displacement sensor as the second electromagnetic sensor 7a. The second electromagnetic sensor 7a includes a second drive coil 23 that generates an eddy current on the top surface 5a of the base material 5A, and a second detection coil 24 that detects the eddy current generated by the second drive coil 23 (see FIG. 5). Furthermore, the second measurer 7 includes a second drive circuit 7b, which is a high frequency transmission circuit that flows a high frequency current to the second drive coil 23 provided in the second electromagnetic sensor 7a, and a second detection circuit 7c, which detects the second distance A2 on the basis of the eddy current that has been detected by the second detection coil 24 provided in the second electromagnetic sensor 7a.

The second drive coil 23 is electrically connected to the second drive circuit 7b. The second detection coil 24 is electrically connected to the second detection circuit 7c. The second drive coil 23 and the second detection coil 24 are formed on the circuit board 25 that will be described later.

The third measurer 8 includes a laser displacement gauge as a laser sensor 8a. Although not illustrated, the laser sensor 8a includes a light emitting element that irradiates the covering layer 5B of the measurement target object 5 with a laser beam, and a light receiving element that receives the reflected light of the laser beam reflected at the top surface 5a of the covering layer 5B. Furthermore, the third measurer 8 includes a third detection circuit 8c, which detects the third distance B on the basis of the detection result obtained by the light receiving element provided in the laser sensor 8a.

Furthermore, the measurement device 1 includes, as illustrated in FIG. 1, a control circuit 10 that controls the first measurer 6, the second measurer 7, and the third measurer 8. The control circuit 10 includes an arithmetic element, which performs various kinds of signal processing, and is electrically connected to each of the first drive circuit 6b and the first detection circuit 6c that are provided in the first measurer 6, the second drive circuit 7b and the second detection circuit 7c that are provided in the second measurer 7, and the third detection circuit 8c that is provided in the third measurer 8. The control circuit 10 performs control of a measurement operation or the like of each of the first electromagnetic sensor 6a, the second electromagnetic sensor 7a, and the laser sensor 8a. Moreover, each of the first drive circuit 6b and the first detection circuit 6c, the second drive circuit 7b and the second detection circuit 7c, the third detection circuit 8c, and the control circuit 10, may be included in the measurement device 1, or may be included in a control device (not illustrated) that is electrically connected to the measurement device 1.

### Arithmetic operation related to thickness of covering layer

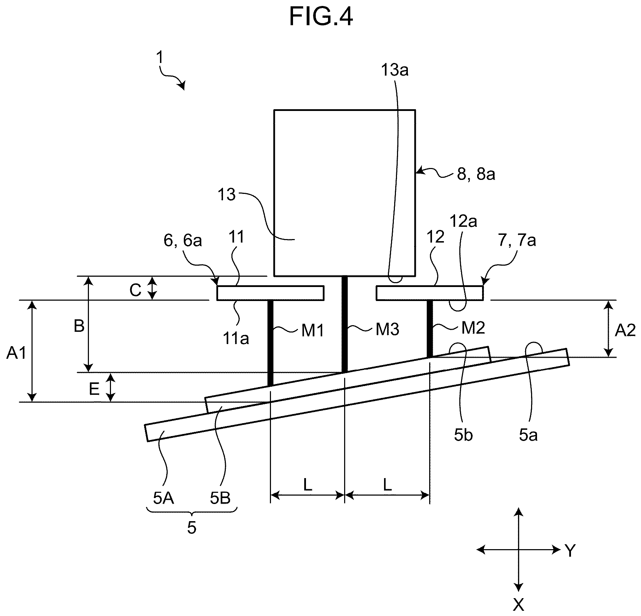

FIG. 3 is a schematic side view for explaining a problem in a case where the thickness direction of the measurement target object 5 is inclined with respect to the measurement axis direction X. FIG. 4 is a schematic diagram for explaining an arithmetic operation related to the thickness of the covering layer 5B provided in the measurement device 1 according to the first embodiment.

As illustrated in FIG. 3, in a case where the thickness direction of the measurement target object 5, that is, the normal line direction of the top surface 5b of the covering layer 5B, is inclined at an angle of inclination θ with respect to the measurement axis direction X, in other words, in a case where the top surface 5b, which is formed on the covering layer 5B provided in the measurement target object 5, is inclined at the angle of inclination θ with respect to the plane that is perpendicular to the measurement axis direction X, when a measurement is performed along a measurement axis M0, a thickness E of the covering layer 5B is calculated by a difference between the measurement value of the distance to the top surface 5b formed on the covering layer 5B, and the measurement value of the distance to the top surface 5a formed on the base material 5A. As a result of this, an error, which is caused by the angle of inclination θ of the measurement target object 5, occurs in the measurement value, and accordingly, there is a problem in that the thickness E of the covering layer 5B, which is measured together with the angle of inclination θ with respect to a correct thickness D of the covering layer 5B, becomes E = D/cos θ, and the obtained measurement value consequently includes the error.

The measurement device 1 according to the first embodiment is used to measure the electrode sheet in a manufacturing process of manufacturing the electrode sheet for the battery. The manufacturing device used for manufacturing the electrode sheet includes a supply section, which includes a supply roll that supplies an elongated metal foil as the base material 5A, a coating section, which applies an active substance as the covering layer 5B to the metal foil supplied from the supply section, a drying section, which dries the active substance that has been applied to the metal foil, and a winding section, which includes a wind-up roll that winds up the electrode sheet that has been conveyed from the drying section. The measurement device 1 is installed on a conveyance path of the metal foil or the electrode sheet that is disposed between the supply section and the coating section, between the coating section and the drying section, and between the drying section and the winding section. At the position at which the measurement device 1 is to be installed in this way, the metal foil or the electrode sheet is conveyed in a state in which tension is applied without restriction in the thickness direction, so that this position is affected by a curvature caused by a vibration and a deflection of the metal foil or the electrode sheet in the thickness direction, and the thickness direction of the measurement target object 5 is inclined with respect to the measurement axis M0. As a result of this, it is difficult to avoid a variation in the angle of inclination θ. Therefore, in particular, in the manufacturing process of manufacturing the electrode sheet, it is difficult to maintain the measurement target object in a state in which the angle of inclination θ does not occur, the measured thickness tends to have an error.

Accordingly, in order to correct the error occurring in the thickness D of the covering layer 5B as described above, the measurement device 1 measures the distance to the top surface 5a of the base material 5A by using the two measurers that are the first measurer 6 and the second measurer 7. As illustrated in FIG. 1 and FIG. 4, the first distance between the first end surface 11a, provided at the first measurer 6, and the top surface 5a of the base material 5A with respect to the measurement axis direction X is denoted by A1, the second distance between the second end surface 12a, provided at the second measurer 7, and the top surface 5a of the base material 5A with respect to the measurement axis direction X is denoted by A2, and the third distance between the third end surface 13a, provided at the third measurer 8, and the top surface (upper surface) 5b of the covering layer 5B with respect to the measurement axis direction X is denoted by B. Furthermore, an interval between the first end surface 11a and the second end surface 12a that are located on the same plane, and the third end surface 13a that is located at an upper part of the end surfaces 11a and 12a of the first end surface 11a and the second end surface 12a, respectively, with respect to the measurement axis direction X is denoted by C. Furthermore, each of the distance between the first measurement axis M1 and the third measurement axis M3, and the distance between the second measurement axis M2 and the third measurement axis M3 is denoted by L.

At this time, in a case where the thickness direction of the measurement target object 5 is inclined at the angle of inclination θ with respect to the measurement axis direction X, an apparent value of the thickness E of the covering layer 5B along the measurement axis direction X is$E = \left\{\left(A1 + A2\right)/2\right\} - \left(B - C\right)$... . The angle of inclination θ is obtained by $θ = atan \left\{\left(A1 + A2\right)/\left(2 \times L\right)\right\}$. Then, the correct thickness D of the covering layer 5B is able to be obtained by D = E × cos θ ... (Equation 3), so that it is possible to calculate the thickness D of the covering layer 5B in which the error caused by the angle of inclination θ has been corrected by using Expressions 1 to 3 described above. As a result of this, it is possible to increase the measurement accuracy of the thickness D of the covering layer 5B. Moreover, (A1 + A2)/2 in Expression 1 corresponds to a distance that is measured by a virtual eddy current displacement sensor, in which a measurement axis is provided so as to pass through a point of intersection of the third measurement axis M3 of the third measurer 8 and the top surface 5a of the base material 5A. In short, in the measurement device 1, on the basis of each of the measurement values of the first electromagnetic sensor 6a and the second electromagnetic sensor 7a, the measurement value is calculated by the virtual eddy current displacement sensor, in which the measurement axis is provided so as to agree with the third measurement axis M3 of the laser sensor 8a.

### Drive frequency of eddy current displacement sensor

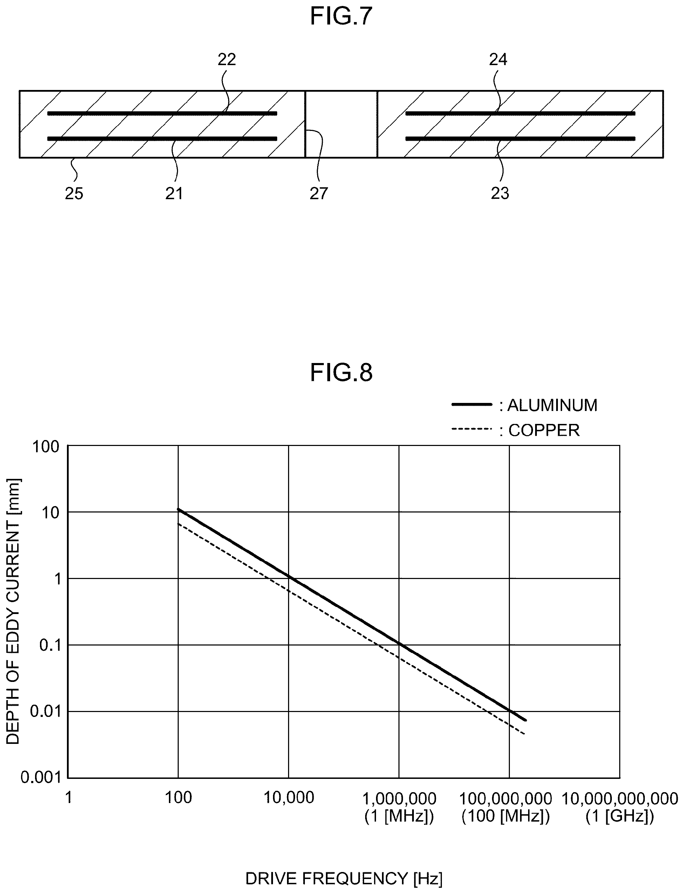

The eddy current displacement sensor that is used each of the first electromagnetic sensor 6a, provided in the first measurer 6, and the second electromagnetic sensor 7a, provided in the second measurer 7, will be described. FIG. 8 is a graph illustrating a relationship between a drive frequency and a depth of the eddy current that is generated by the eddy current displacement sensor provided in the measurement device 1 according to the first embodiment.

In FIG. 8, the vertical axis indicates the measurement axis direction X, that is, indicates the depth of the eddy current generated with respect to the thickness direction of the measurement target object 5, that is, indicates a position [mm] of the eddy current, and the horizontal axis indicates a drive frequency [Hz] of the high frequency current applied to the drive coil, provided in the eddy current displacement sensor. In FIG. 8, a change exhibited in a case where the measurement target object 5 is made of aluminum, is indicated by a solid line, and a change exhibited in a case where the measurement target object 5 is made of copper, is indicated by a broken line. The depth of the eddy current mentioned here indicates a position of the depth from the top surface 5a, in which the magnitude of the eddy current is about 1/e times the magnitude, that is, about 36.8%, at the top surface of the measurement target object 5 (the top surface 5a of the base material 5A).

As illustrated in FIG. 8, the position of the depth of the eddy current tends to be lower in accordance with the drive frequency becomes higher. It is difficult for the eddy current displacement sensor to measure the accurate thickness in a case where the position of the depth of the eddy current in the measurement axis direction X is not located in the interior of the base material 5A (within the thickness range of the base material 5A), but is located at an external position of the base material 5A after having passed through the base material 5A. As a result of this, in the first embodiment, the drive frequency is appropriately controlled by the control circuit 10 such that the position of the depth of the eddy current, generated by the eddy current displacement sensor, is located within the thickness range of the base material 5A. For example, in a case where the thickness of the base material 5A is equal to or less than 10 [µm], the drive frequency is set to 100 [MHz] or higher, and is preferably several hundred megahertz [MHz] or higher. In this way, in the measurement device 1, the control circuit 10 controls the position of the depth of the eddy current generated by each of the eddy current displacement sensors provided in the first measurer 6 and the second measurer 7, so that the measurement device 1 is able to appropriately measure the first distance A1 and the second distance A2 to the top surface 5a of the base material 5A with a thickness of several tens of micrometers [µm] or less.

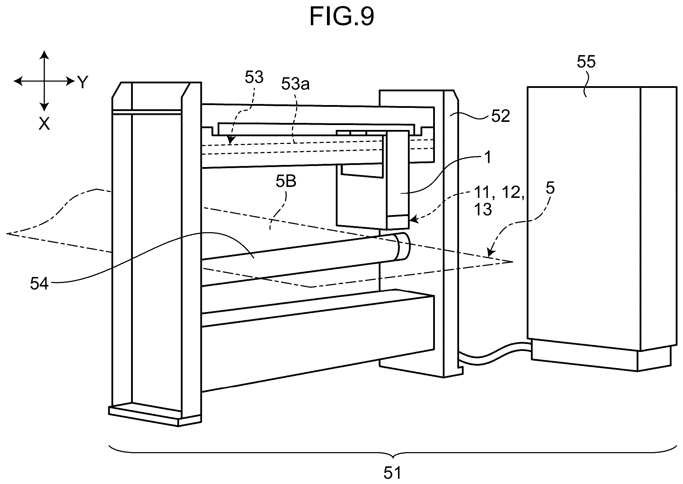

Furthermore, when the thickness of the base material 5A is equal to or less than 10 [µm], in a case where it is difficult to perform control such that the position of the depth of the eddy current, generated by the eddy current displacement sensor, is located within a thickness range of the base material 5A, by performing a measurement by placing the base material 5A on a placement member 54 (see FIG. 9), such as a metallic plate, having the electrical conductivity that is substantially the same as that of the base material 5A, it is possible to use the placement member 54 on which the base material 5A is placed as a part of the base material 5A. As a result of this, it is possible to appropriately measure the first distance A1 and the second distance A2 to the top surface 5a of the base material 5A. Here, substantially the same electrical conductivity indicates that a ratio of the electrical conductivity of the placement member 54 to the electrical conductivity of the base material 5A is about equal to or greater than 0.9 and equal to or less than 1.1.

Furthermore, in a case where the position of the depth of the eddy current, generated by the eddy current displacement sensor, is located within the thickness range of the base material 5A, it is possible to form the placement member 54 by using a nonconductive material made of ceramics, glass, a resin, or the like. When the measurement target object 5 is measured, by placing the measurement target object 5 on the placement member 54, the position of the measurement target object 5 with respect to the measurement axis direction X, becomes stable, so that it is possible to perform the measurement by keeping a variation in inclination of the base material 5A for each measurement within a certain range.

### Drive of first measurer and second measurer

In the measurement device 1, for example, the first drive circuit 6b, provided in the first measurer 6, drives the first drive coil 21, included in the first electromagnetic sensor 6a, at the first drive frequency, and the second drive circuit 7b, provided in the second measurer 7, drives the second drive coil 23, included in the second electromagnetic sensor 7a, at the second drive frequency that is different from the first drive frequency. Here, the drive frequency indicates a transmission frequency of the high frequency current, which is applied to the first drive coil 21 and the second drive coil 23.

In this case, the first detection circuit 6c and the second detection circuit 7c includes a frequency selection member (not illustrated) that selectively detects only the desired drive frequency between the first drive frequency and the second drive frequency that are coexisting at the time of measurement. As the frequency selection member, for example, one of a lock-in amplifier and a bandpass filter is used, or both of the lock-in amplifier and the bandpass filter are used. The bandpass filter may be either an analog filter or a digital filter. The frequency selection member is included in each of the first measurer 6 and the second measurer 7, so that it is possible to appropriately measure the first distance A1 and the second distance A2, by avoiding each of the detection signals detected by the first electromagnetic sensor 6a and the second electromagnetic sensor 7a from being affected.

Furthermore, in the measurement device 1, the first drive frequency of the first measurer 6 and the second drive frequency of the second measurer 7 need not necessarily be different, and the same drive frequency may also be used. In other words, in the measurement device 1, the first drive circuit 6b, provided in the first measurer 6, may drive the first drive coil 21, included in the first electromagnetic sensor 6a, at the first drive frequency, the second drive circuit 7b, provided in the second measurer 7, may drive the second drive coil 23, included in the second electromagnetic sensor 7a, at the first drive frequency.

In this case, the control circuit 10 performs control such that the time at which the first drive circuit 6b is driven, and the time at which the second drive circuit 7b is driven, are shifted. By shifting each of the driving time, each of the first electromagnetic sensor 6a and the second electromagnetic sensor 7a is able to detect the individual detection signal, so that it is possible to appropriately perform a measurement of each of the first distance A1 and the second distance A2.

### Circuit board

As described above, in the first embodiment, it is assumed that the electrode sheet is the measurement target object 5, and, in a case where the thickness of the base material 5A is equal to or less than 10 [µm], the drive frequency is set to 100 [MHz] or higher, and is preferably several hundred megahertz [MHz] or higher. As a result of this, the first electromagnetic sensor 6a and the second electromagnetic sensor 7a, which are the eddy current displacement sensors, are able to obtain appropriate detection sensitivity, when each of the number of turns of the first drive coil 21 and the first detection coil 22, and the number of turns of the second drive coil 23 and the second detection coil 24 (hereinafter, also referred to as a coil), is about one turn to several tens of turns. In this way, the number of turns of the coil is small, it is possible to form the coil on the circuit board 25 by performing a printing process.

For example, in a structure in which a coil is formed by winding a conducting wire around which an insulation coating is formed, a positional shift of the conducting wire to be wound or a variation in shape of the wound coil, tends to occur. As a result of this, for example, the relative position with the other sensor provided in the different measurer varies, due to a variation in individual eddy current displacement sensors, and the measurement reference position or the measurement range accordingly varies, which results in a decrease in measurement accuracy. In contrast, in the first embodiment, it is possible to form a coil having a small number of turns on the circuit board 25, so that it is possible to suppress a variation in the measurement reference positions or the measurement ranges, and it is possible to increase the measurement accuracy. In addition, as compared with the manufacturing process of forming the coil by winding the conducting wire, according to the first embodiment, it is possible to improve a reduction in manufacturing cost of the eddy current displacement sensor, by forming the coil on the circuit board 25.

FIG. 5 is a plan view for explaining a relevant part of each of the eddy current displacement sensors according to the first embodiment. The measurement device 1 includes, as illustrated in FIG. 5, the circuit board 25 on which the first drive coil 21 and the first detection coil 22, which are included in the first electromagnetic sensor 6a, and the second drive coil 23 and the second detection coil 24, which are included in the second electromagnetic sensor 7a, are formed.

The circuit board 25 is, for example, a printed circuit board, and is provided, along the third end surface 13a, at the position adjacent to the third end portion 13 of the third measurer 8. For example, the circuit board 25 is arranged in the vicinity of the third end surface 13a such that the mounting surface is opposite the third end surface 13a. Each of the first drive coil 21 and the first detection coil 22 is formed in a spiral shape around a same first center O1 located on the circuit board 25. As a result of this, it is possible to compactly form the first electromagnetic sensor 6a and the circuit board 25, so that it is possible to reduce the size of the measurement device 1. The first drive coil 21 extends from a terminal 21a at one end located on the first center O1 side in a radial direction of the spiral to a terminal 21b at the other end, and is formed with two turns around the first center O1. Similarly, the first detection coil 22 extends along the first drive coil 21 from a terminal 22a at one end located on the first center O1 side to a terminal 22b at the other end, and is formed with two turns around the first center O1.

Each of the second drive coil 23 and the second detection coil 24 is formed in a spiral shape around a same second center O2 located on the circuit board 25. As a result of this, it is possible to compactly form the second electromagnetic sensor 7a and the circuit board 25, so that it is possible to reduce the size of the measurement device 1. The second center O2 is the position that is located away from the first center O1 with a space corresponding to the above described "distance L × 2". The second drive coil 23 extends from a terminal 23a at one end located on the second center O2 side in a radial direction of the spiral to a terminal 23b at the other end, and is formed with two turns around the second center O2. Similarly, the second detection coil 24 extends from a terminal 24a at one end located on the second center O2 side to a terminal 24b at the other end along the second drive coil 23, and is formed with two turns around the second center O2. Therefore, on the circuit board 25, two eddy current displacement sensors are formed to have a first measurement axis M1, which passes through the first center O1, and a second measurement axis M2, which passes through the second center O2.

Furthermore, the circuit board 25 includes an opening 27 through which a laser beam, emitted from the laser sensor 8a provided in the third measurer 8, passes. The opening 27 is formed between a set of the first drive coil 21 and the first detection coil 22 and a set of the second drive coil 23 and the second detection coil 24 that are provided on the circuit board 25, and is formed in a rectangular shape at the center of the circuit board 25. The opening 27 is formed through which irradiation light and reflected light of the laser beam, emitted from the laser sensor 8a, passes, and through which third measurement axis M3 of the third measurer 8 passes. Since the circuit board 25 includes the opening 27 in this way, it is possible to form both of the first electromagnetic sensor 6a and the second electromagnetic sensor 7a on the single piece of the circuit board 25, instead of individually forming these sensors on respective circuit boards, so that it is possible to simplify the structure of the measurement device 1.

FIG. 6 is a plan view of a modification of the relevant part of each of the eddy current displacement sensors according to the first embodiment. As illustrated in FIG. 6, the first drive coil 21 may be arranged on the inner side of the spiral around the first center O1 in the radial direction, and the first detection coil 22 may be arranged on the outer side of the spiral around the first center O1 in in the radial direction. Also, both of the second drive coil 23 and the second detection coil 24 may be arranged in the same manner as the first drive coil 21 and the first detection coil 22. Moreover, as described above, in a case where the first drive coil 21 and the second drive coil 23 are driven at different drive frequencies, the direction of the spiral of each of the coils of the first drive coil 21 and the first detection coil 22 and the coils of the second drive coil 23 and the second detection coil 24, may be either clockwise or counterclockwise, and are not limited to the direction of the spiral illustrated in FIG. 5 and FIG. 6.

FIG. 7 is a plan view illustrating another modification of the relevant part of each of the eddy current displacement sensors according to the first embodiment. As illustrated in FIG. 7, the first drive coil 21 and the first detection coil 22 may be formed by being laminated on the circuit board 25 in the thickness direction. FIG. 7 illustrates one example in which, in the thickness direction of the circuit board 25, the first drive coil 21 is arranged on the measurement target object 5 side, and the first detection coil 22 is arranged on the side opposite the side on which the measurement target object 5 is arranged. The positions of the first drive coil 21 and the first detection coil 22 in the thickness direction of the circuit board 25, are not limited to this example. Also, the second drive coil 23 and the second detection coil 24 may also be formed in a similar manner as the first drive coil 21 and the first detection coil 22.

Furthermore, in the first embodiment, each of the first drive coil 21 and the first detection coil 22 is individually formed, and each of the second drive coil 23 and the second detection coil 24 is individually formed, but a single coil may also be used as both a drive coil and a detection coil. Furthermore, on the circuit board 25, in addition to each of the coil provided in each of the first, second, and third measurers 6, 7, and 8 as described above, the first drive circuit 6b, the first detection circuit 6c, the second drive circuit 7b, the second detection circuit 7c, and the like may also be formed, and thus, it is possible to simplify the structure of the measurement device 1.

Furthermore, although not illustrated, the measurement device 1 according to the first embodiment, may also include a temperature sensor, which detects the temperatures of each of the first measurer 6, the second measurer 7 and the third measurer 8, and a temperature adjuster which includes a heater or the like that heats each of the first, second, and third measurers 6, 7, and 8 or a Peltier device or the like that cools each of the first, second, and third measurers 6, 7, and 8, on the basis of each of the detection results of the temperature sensors. Both of the temperature sensor and the temperature adjuster are controlled by the control circuit 10. As a result of this, in a case where the temperature of the measurement environment of each of the measurement device 1 and the measurement target object 5, varies, it is possible to control the temperature of each of the first, second, and third measurers 6, 7, and 8 at a constant level, and it is possible to correct a measurement value of each of the first, second, and third measurers 6, 7, and 8 on the basis of the detection results of the respective temperature sensors.

### Measurement apparatus

FIG. 9 is a perspective view illustrating a measurement apparatus that includes the measurement device 1 according to the first embodiment. As illustrated in FIG. 9, a measurement apparatus 51 according to the first embodiment includes the measurement device 1 described above, a supporter 52, which movably supports the measurement device 1, a driver 53, which moves the measurement device 1 in the direction Y that is perpendicular to the measurement axis direction X with respect to the measurement target object 5, the placement member 54 on which the measurement target object 5 is placed, and a controller 55, which controls the measurement device 1 and the driver 53.

Although not illustrated, the measurement apparatus 51 according to the embodiment is used in the manufacturing process of manufacturing the electrode sheet for a battery, and is installed on a conveyance path of the electrode sheet that is disposed at the positions of a supply section, which includes a supply roll that supplies an elongated metal foil, a coating section, which applies an active substance to the metal foil, a drying section, which dries the active substance, and a winding section, which includes a wind-up roll that winds up the conveyed electrode sheet. The measurement apparatus 51 measures a thickness D of the covering layer 5B, which is provided in the measurement target object 5 that is the electrode sheet conveyed along the conveyance path.

The driver 53 includes a guide portion 53a, which is formed at the supporter 52, and a drive mechanism (not illustrated), which moves the measurement device 1 along the guide portion 53a. The measurement apparatus 51 performs a measurement by moving, for example, the measurement device 1 with respect to the measurement target object 5 by using the driver 53.

The controller 55 is electrically connected to the first measurer 6, the second measurer 7, the third measurer 8, and the driver 53 that are included in the measurement device 1 via wiring or the like. The controller 55 includes, for example, the first drive circuit 6b, the first detection circuit 6c, the second drive circuit 7b, the second detection circuit 7c, the third detection circuit 8c, the control circuit 10, and the like that are included in the measurement device 1 described above. The controller 55 performs control such that, for example, each of the first measurer 6, the second measurer 7, and the third measurer 8 measures, almost at the same time, the measurement target object 5, which is conveyed in the direction Y that is perpendicular to the measurement axis direction X with respect to the measurement device 1. As a result of this, when the measurement apparatus 51 measures the measurement target object 5, which is conveyed with respect to the measurement device 1, it is possible to avoid each of the measurement positions of the first measurer 6, the second measurer 7, and the third measurer 8 from being significantly separated, so that it is possible to appropriately ensure the measurement accuracy of the measurement target object 5.

The placement member 54 is a conveyance roller, which supports the measurement target object 5 that is conveyed by being supplied to, for example, the measurement apparatus 51, and is constituted such that the conveyance roller is rotatably provided to the supporter 52. The measurement apparatus 51 according to the first embodiment is not limited to measuring the thickness of the measurement target object 5 that is being conveyed, and, instead of the conveyance roller as the placement member 54, the measurement apparatus 51 may include a placement board (not illustrated) on which the measurement target object 5 is placed, or may include the conveyance roller and the placement board.

Furthermore, for example, in a case where a measurement is performed at the position at which the first measurement axis M1 and the second measurement axis M2 of the measurement device 1, pass the placement member 54, even in a case where the position of the depth of the eddy current with respect to the measurement axis direction X in the eddy current displacement sensor included in each of the first measurer 6 and the second measurer 7, penetrates beyond the thickness of the base material 5A, the placement member 54, such as the conveyance roller or the placement board, has substantially the same electrical conductivity as the base material 5A, so that it is possible to treat the placement member 54 as a part of the base material 5A. As a result of this, it is possible to appropriately measure both of the first distance A1 between the top surface 5a of the base material 5A and the first end surface 11a, and the second distance A2 between the top surface 5a of the base material 5A and the second end surface 12a, by the eddy current displacement sensors that are the first electromagnetic sensor 6a and the second electromagnetic sensor 7a.

Furthermore, by measuring the thickness D of the covering layer 5B for each predetermined range in the conveyance direction of the measurement target object 5, the measurement apparatus 51 is able to obtain a change in the thickness D of the covering layer 5B, and the shape of the top surface 5b of the covering layer 5B, in a case where the conveyance direction of the measurement target object 5 is a horizontal axis and the thickness direction of the measurement target object 5 is a vertical axis.

Moreover, the configuration of the measurement apparatus 51 is not limited to the configuration in which the measurement apparatus 51 includes the measurement device 1 according to the first embodiment, but the measurement apparatus 51 may include a measurement device 2 or 3 according to another embodiment that will be described later.

### Measurement method

The measurement method according to the first embodiment measures the thickness D of the covering layer 5B that is formed on the top surface 5a of the base material 5A, provided in the measurement target object 5, by using the measurement device 1 and the measurement apparatus 51 described above. The measurement target object 5 is an electrode sheet for a battery, and, for example, the base material 5A is a metal foil, and the covering layer 5B is an active substance.

### Effects of first embodiment

As described above, the measurement device 1 according to the first embodiment includes the first measurer 6 which is provided with the first end portion 11 having the first end surface 11a as the first measurement reference position, and which electromagnetically measures the first distance A1 between the first end surface 11a and the top surface 5a of the base material 5A with respect to the measurement axis direction, the second measurer 7 which is provided with the second end portion 12 having the second end surface 12a as the second measurement reference position, and which electromagnetically measures the second distance A2 between the second end surface 12a and the top surface 5a of the base material 5A with respect to the measurement axis direction X, and the third measurer 8 which is provided with the third end portion 13 having the third end surface 13a as the third measurement reference position, and which optically measures the third distance B between the third end surface 13a and the top surface 5b of the covering layer 5B with respect to the measurement axis direction X. In addition, in the direction Y perpendicular to the measurement axis direction X, the first end portion 11, the second end portion 12, and the third end portion 13 are arranged adjacent to each other. As a result of this, it is possible to correct the error caused by the inclination of the measurement target object 5, with respect to the measurement axis direction X in the thickness direction on the basis of both of the measurement value, obtained by the first measurer 6, and the measurement value, obtained by the second measurer 7, so that it is possible to increase the measurement accuracy of the thickness D of the covering layer 5B.

Furthermore, in the measurement device 1 according to the first embodiment, in the direction Y perpendicular to the measurement axis direction X, the third measurement axis M3 of the third measurer 8 is arranged at the center between the first measurement axis M1 of the first measurer 6, and the second measurement axis M2 of the second measurer 7. As a result of this, it is possible to simplify the arithmetic expression that is used to calculate the thickness D of the covering layer 5B.

Furthermore, in the measurement device 1 according to the first embodiment, the first measurer 6 includes the first electromagnetic sensor 6a, and the first drive circuit 6b, which drives the first electromagnetic sensor 6a at the first drive frequency, and the second measurer 7 includes the second electromagnetic sensor 7a, and the second drive circuit 7b, which drives the second electromagnetic sensor 7a at the second drive frequency that is different from the first drive frequency. As a result of this, it is possible to appropriately measure the first distance A1 and the second distance A2, by avoiding each of the detection signals detected by the first measurer 6 and the second measurer 7 from being affected.

Furthermore, in the measurement device 1 according to the first embodiment, the first measurer 6 includes the first electromagnetic sensor 6a, and the first drive circuit 6b that drives the first electromagnetic sensor 6a at the first drive frequency, the second measurer 7 includes the second electromagnetic sensor 7a, and the second drive circuit 7b that drives the second electromagnetic sensor 7a at the first drive frequency, and the control circuit 10 performs control such that the time at which the first drive circuit 6b is driven, and the time at which the second drive circuit 7b is driven, are shifted. As a result of this, each of the first electromagnetic sensor 6a and the second electromagnetic sensor 7a is able to detect the individual detection signal, so that it is possible to appropriately perform measurement of the first distance A1 and the second distance A2.

Furthermore, in the first measurer 6 and the second measurer 7 that are included in the measurement device 1 according to the first embodiment, the first electromagnetic sensor 6a includes the first drive coil 21 that generates an eddy current, the second electromagnetic sensor 7a includes the second drive coil 23 that generates an eddy current, and the circuit board 25, on which the first drive coil 21 and the second drive coil 23 are formed, is provided, along the third end surface 13a, at the position adjacent to the third end portion 13. As a result of this, it is possible to suppress a variation in the measurement reference positions of the first electromagnetic sensor 6a and the second electromagnetic sensor 7a or the measurement ranges, and it is possible to increase the measurement accuracy. In addition, as compared with the manufacturing process of forming the coil by winding the conducting wire, according to the first embodiment, it is possible to improve a reduction in manufacturing cost of the first electromagnetic sensor 6a and the second electromagnetic sensor 7a by forming the coil on the circuit board 25.

Furthermore, in the first measurer 6 and the second measurer 7 that are included in the measurement device 1 according to the first embodiment, the first electromagnetic sensor 6a includes the first detection coil 22 that detects the eddy current that has been generated by the first drive coil 21, the second electromagnetic sensor 7a includes the second detection coil 24 that detects the eddy current that has been generated by the second drive coil 23, and the first detection coil 22 and the second detection coil 24 are formed on the circuit board 25. As a result of this, it is possible to suppress a variation in the measurement reference positions of the first electromagnetic sensor 6a and the second electromagnetic sensor 7a or the measurement ranges, and it is possible to increase the measurement accuracy. In addition, as compared with the manufacturing process of forming the coil by winding the conducting wire, according to the first embodiment, it is possible to improve a reduction in manufacturing cost of the first electromagnetic sensor 6a and the second electromagnetic sensor 7a by forming the coil on the circuit board 25.

Furthermore, on the circuit board 25 provided in the measurement device 1 according to the first embodiment, each of the first drive coil 21 and the first detection coil 22 is formed in a spiral shape around the first center O1 located on the circuit board 25, and each of the second drive coil 23 and the second detection coil 24 is formed in a spiral shape around the second center O2 located on the circuit board 25. As a result of this, it is possible to compactly form the first electromagnetic sensor 6a and the second electromagnetic sensor 7a on the circuit board 25, so that it is possible to reduce the size of the measurement device 1.

Furthermore, the third measurer 8 included in the measurement device 1 according to the first embodiment includes the laser sensor 8a, and includes the circuit board 25, which includes the opening 27 through which a laser beam, emitted from the laser sensor 8a, passes. As a result of this, it is possible to form both of the first electromagnetic sensor 6a and the second electromagnetic sensor 7a on the single circuit board 25, so that it is possible to simplify the structure of the measurement device 1.

In the following, another embodiment will be described with reference to drawings. In the other embodiment, by assigning the same reference numerals to components having the same configuration as those described above in the first embodiment, descriptions thereof will be omitted.

### Second Embodiment

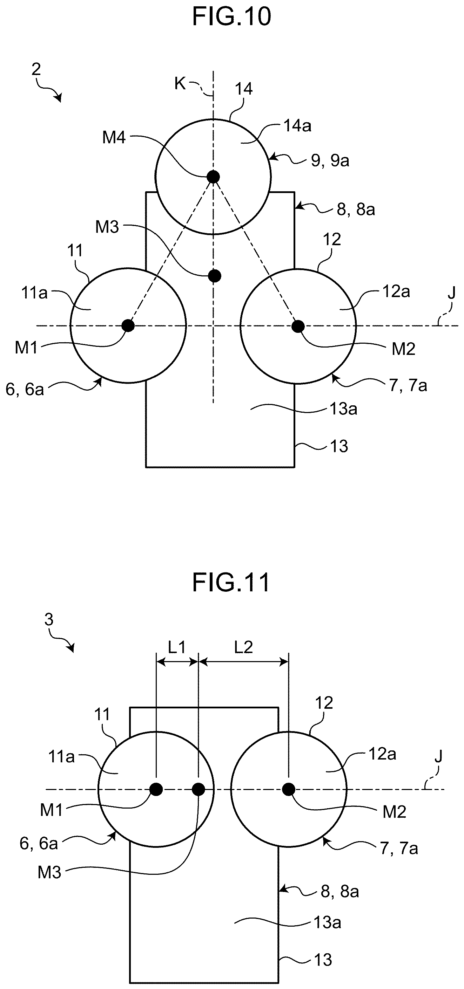

A second embodiment is different from the first embodiment in that the number of measurers each of which electromagnetically measures the measurement target object 5 is different. FIG. 10 is a plan view schematically illustrating the first end surface 11a, the second end surface 12a, the third end surface 13a, and a fourth end surface 14a provided in a measurement device according to the second embodiment. As illustrated in FIG. 4, the measurement device 2 according to the second embodiment further includes a fourth measurer 9 which is provided with a fourth end portion 14 having the fourth end surface 14a as a fourth measurement reference position, and which electromagnetically measures a fourth distance A3 between the fourth end surface 14a and the top surface 5a of the base material 5A.

The fourth distance A3 is the same as the first distance A1 and the second distance A2 illustrated in FIG. 1, so that an illustration of the fourth distance A3 will be omitted. The fourth measurer 9 includes, similarly to the first measurer 6 and the second measurer 7, an electromagnetic sensor 9a that is formed on the circuit board 25. Therefore, in the second embodiment, three electromagnetic sensors each of which measures a distance to the top surface 5a of the base material 5A, are provided, and an error, occurring in the thickness associated with the angle of inclination θ of the measurement target object 5 with respect to the measurement axis direction X, is corrected, by using the three electromagnetic sensors.

In the measurement device 2, in the direction Y perpendicular to the measurement axis direction X, the fourth end portion 14 is arranged adjacent to at least one of the first end portion 11, the second end portion 12, and the third end portion 13. In the second embodiment, on the plane perpendicular to the measurement axis direction X, the first measurement axis M1 of the first measurer 6, the second measurement axis M2 of the second measurer 7, and the fourth measurement axis M4 of the fourth measurer 9 each are arranged so as to be located at the respective vertices of an equilateral triangle, and also, the third measurement axis M3 of the third measurer 8 is arranged at an equal distance with respect to each of the first measurement axis M1, the second measurement axis M2, and the fourth measurement axis M4. In other words, the first measurement axis M1, the second measurement axis M2, and the fourth measurement axis M4 each are located at the respective vertices of the equilateral triangle, and the third measurement axis M3 is arranged so as to be located at the centroid of the equilateral triangle.

In other words, the first measurement axis M1 and the second measurement axis M2 are arranged on a straight line J along the direction Y perpendicular to the measurement axis direction X. The fourth measurement axis M4 and the third measurement axis M3 are arranged on a straight line K along the direction Y perpendicular to the measurement axis direction X, and the straight line K is perpendicular to the straight line J. By arranging the first measurement axis M1, the second measurement axis M2, and the fourth measurement axis M4 in this way, in a case where the thickness direction of the measurement target object 5 is inclined with respect to the measurement axis direction X, it is possible to correct the error occurring in the thickness associated with each of the inclinations of the two directions, which are the direction of the straight line J and the direction of the straight line K that are perpendicular to each other. As a result of this, as compared with the first embodiment, in a case of the second embodiment, it is possible to further increase the measurement accuracy of the thickness D of the measurement target object 5. Furthermore, by arranging each of the measurement axes M1, M2, M3, and M4 as described above, it is possible to simplify the arithmetic expression that is used to calculate the thickness D of the covering layer 5B.

Here, an explanation of the arithmetic expression for calculating the thickness D of the covering layer 5B will be omitted, but it is possible to calculate a normal line direction of the top surface 5a of the base material 5A on the basis of a measurement value of each of the three eddy current displacement sensors, and it is possible to calculate the angle of inclination θ formed by the normal line direction and the measurement axis direction X. Consequently, in also the second embodiment, similarly to the first embodiment, it is possible to calculate the thickness D that is related to the covering layer 5B and in which an error caused by an inclination of the measurement target object 5 in the thickness direction has been corrected.

Furthermore, in the second embodiment, as one example, the first end surface 11a, the second end surface 12a, and the fourth end surface 14a are arranged so as to be located on the same plane perpendicular to the measurement axis direction X. The third end surface 13a is located at an upper part that is located above the positions of the first end surface 11a, the second end surface 12a, and the fourth end surface 14a.

Moreover, in the second embodiment, the number of measurers each of which electromagnetically measures the distance to the top surface 5a of the base material 5A, is not limited to the example, and it is possible to further increase the measurement accuracy of the thickness D of the covering layer 5B.

As described above, the measurement device 2 according to the second embodiment includes the fourth measurer 9, so that the measurement device 2 is able to further increase the measurement accuracy of the thickness D of the covering layer 5B.

### Third Embodiment

FIG. 11 is a plan view schematically illustrating the first end surface 11a, the second end surface 12a, and the third end surface 13a provided in a measurement device according to a third embodiment. The third embodiment corresponds to a modification of the first embodiment, and the position of the first measurement axis M1 of the first measurer 6 is different from that described above in the first embodiment.

As described above, in the first embodiment, both of the first measurement axis M1 of the first electromagnetic sensor 6a and the second measurement axis M2 of the second electromagnetic sensor 7a, are arranged to have the same distance L with respect to the third measurement axis M3 of the laser sensor 8a, but both of the first measurement axis M1 and the second measurement axis M2 may be arranged to have a different distance with respect to the third measurement axis M3. As illustrated in FIG. 11, in a measurement device 3 according to the third embodiment, the first measurement axis M1, the second measurement axis M2, and the third measurement axis M3 are arranged on the same straight line J along the direction Y that is perpendicular to the measurement axis direction X, and a distance L1 between the first measurement axis M1 and the third measurement axis M3, and a distance L2 between the second measurement axis M2 and the third measurement axis M3, are different on the straight line J.

Even in a case where the distance L1 and the distance L2 are different, it is possible to correct an error caused by the angle of inclination θ of the measurement target object 5 with respect to the measurement axis direction X by calculating the angle of inclination θ of the measurement target object 5, on the basis of each of the measurement value of each of the first electromagnetic sensor 6a and the second electromagnetic sensor 7a, and also calculating the measurement value obtained by a virtual electromagnetic displacement sensor in which a measurement axis is provided so as to be aligned with the third measurement axis M3 of the laser sensor 8a.

Moreover, the first measurement axis M1, the second measurement axis M2, and the third measurement axis M3 need not necessarily be located on the same straight line J as described above in the second embodiment, and, it is possible to correct the error caused by the angle of inclination θ of the measurement target object 5. Furthermore, even in a case of the structure in which the three or more eddy current displacement sensors are provided as described above in the second embodiment, in a case where the distances of the measurement axes M1 and M2 of the respective eddy current displacement sensors with respect to the third measurement axis M3 of the laser displacement gauge are different, it is possible to correct the error caused by the angle of inclination θ of the measurement target object 5.

Furthermore, in also the third embodiment, similarly to the first embodiment, it may be possible to perform control such that the drive frequency of the eddy current displacement sensor, provided in each of the first measurer 6, the second measurer 7, and the fourth measurer 9, may be varied, or the time, at which each of the eddy current displacement sensors are driven, may be shifted.

As described above, with the measurement device 3 according to the third embodiment, it is possible to correct the error caused by the angle of inclination θ of the measurement target object 5 with respect to the measurement axis direction X, and increase the measurement accuracy of the thickness D of the covering layer 5B regardless of each of the distance L1 between the first measurement axis M1 and the third measurement axis M3, and the distance L2 between the second measurement axis M2 and the third measurement axis M3 in the direction Y that is perpendicular to the measurement axis direction X.

### Others

Some examples of combinations of the disclosed technical features will be described below.

## Claims

1. A measurement device (1;2;3) that measures, with respect to a measurement axis direction (X), a thickness (D) of a covering layer (5B) that is included in a measurement target object (5) and that is formed on a top surface (5a) of a base material (5A), the measurement device (1;2;3) comprising:
a first measurer (6) which is provided with a first end portion (11) having a first end surface (11a) as a first measurement reference position, and which electromagnetically measures a first distance (A1) between the first end surface (11a) and the top surface (5a) of the base material (5A) with respect to the measurement axis direction (X);
a second measurer (7) which is provided with a second end portion (12) having a second end surface (12a) as a second measurement reference position, and which electromagnetically measures a second distance (A2) between the second end surface (12a) and the top surface (5a) of the base material (5A) with respect to the measurement axis direction (X); and
a third measurer (8) which is provided with a third end portion (13) having a third end surface (13a) as a third measurement reference position, and which optically measures a third distance (B) between the third end surface (13a) and a top surface (5b) of the covering layer (5B) with respect to the measurement axis direction (X), wherein
in a direction (Y) perpendicular to the measurement axis direction (X), the first end portion (11), the second end portion (12), and the third end portion (13) are arranged adjacent to each other.

2. The measurement device (1) according to claim 1, wherein, in the direction (Y) perpendicular to the measurement axis direction (X), a third measurement axis (M3) of the third measurer (8) is arranged at a center between a first measurement axis (M1) of the first measurer (6) and a second measurement axis (M2) of the second measurer (7).

3. The measurement device (1) according to claim 1 or 2, wherein
the first measurer (6) includes a first electromagnetic sensor (6a) and a first drive circuit (6b) that drives the first electromagnetic sensor (6a) at a first drive frequency, and
the second measurer (7) includes a second electromagnetic sensor (7a) and a second drive circuit (7b) that drives the second electromagnetic sensor (7a) at a second drive frequency that is different from the first drive frequency.

4. The measurement device (1) according to claim 1 or 2, further comprising a control circuit (10) that controls the first measurer (6) and the second measurer (7), wherein
the first measurer (6) includes a first electromagnetic sensor (6a) and a first drive circuit (6b) that drives the first electromagnetic sensor (6a) at a first drive frequency,
the second measurer (7) includes a second electromagnetic sensor (7a) and a second drive circuit (7b) that drives the second electromagnetic sensor (7a) at the first drive frequency, and
the control circuit (10) performs control such that a time at which the first drive circuit (6b) is driven and a time at which the second drive circuit (7b) is driven are shifted.

5. The measurement device (1) according to claim 3 or 4, wherein
the first electromagnetic sensor (6a) includes a first drive coil (21) that generates an eddy current,
the second electromagnetic sensor (7a) includes a second drive coil (23) that generates an eddy current, and
a circuit board (25) on which the first drive coil (21) and the second drive coil (23) are formed is provided, along the third end surface (13a), at a position adjacent to the third end portion (13).

6. The measurement device (1) according to claim 5, wherein
the first electromagnetic sensor (6a) includes a first detection coil (22) that detects the eddy current generated by the first drive coil (21),
the second electromagnetic sensor (7a) includes a second detection coil (24) that detects the eddy current generated by the second drive coil (23), and
the first detection coil (22) and the second detection coil (24) are formed on the circuit board (25).

7. The measurement device (1) according to claim 6, wherein, on the circuit board (25),
each of the first drive coil (21) and the first detection coil (22) is formed in a spiral shape around a first center (O1) on the circuit board (25), and
each of the second drive coil (23) and the second detection coil (24) is formed in the spiral shape around a second center (O2) on the circuit board (25).

8. The measurement device (1) according to claim 7, wherein
the third measurer (8) includes a laser sensor (8a), and
the circuit board (25) includes an opening (27) through which a laser beam, emitted from the laser sensor (8a), passes.

9. The measurement device (2) according to any one of claims 1 to 8, further comprising a fourth measurer (9) which is provided with a fourth end portion (14) having a fourth end surface (14a) as a fourth measurement reference position, and which electromagnetically measures a fourth distance (A3) between the fourth end surface (14a) and the top surface (5a) of the base material (5A) with respect to the measurement axis direction (X), wherein,
in the direction (Y) perpendicular to the measurement axis direction (X), the fourth end portion (14) is arranged adjacent to at least one of the first end portion (11), the second end portion (12), and the third end portion (13).

10. The measurement device (2) according to claim 9, wherein, on a plane perpendicular to the measurement axis direction (X),
a first measurement axis (M1) of the first measurer (6), a second measurement axis (M2) of the second measurer (7), and a fourth measurement axis (M4) of the fourth measurer (9) each are arranged so as to be located at respective vertices of an equilateral triangle, and also, a third measurement axis (M3) of the third measurer (8) is arranged at an equal distance with respect to each of the first measurement axis (M1), the second measurement axis (M2), and the fourth measurement axis (M4).

11. A measurement apparatus (51) comprising:
the measurement device (1;2;3) according to any one of claims 1 to 10;
a supporter (52) that movably supports the measurement device (1;2;3);
a driver (53) that moves the measurement device (1;2;3) in the direction (Y) perpendicular to the measurement axis direction (X) with respect to the measurement target object (5); and
a controller (55) that controls the measurement device (1;2;3) and the driver (53).

12. The measurement apparatus (51) according to claim 11, further comprising
a placement member (54) on which the measurement target object (5) is placed, wherein
a ratio of electrical conductivity of the placement member (54) to electrical conductivity of the base material (5A) is equal to or greater than 0.9 and equal to or less than 1.1.

13. A measurement method for measuring, with respect to a measurement axis direction (X), a thickness (D) of a covering layer (5B) that is included in a measurement target object (5) and that is formed on a top surface (5a) of a base material (5A), by using a measurement device (1;2;3) in which
a first measurer (6) which is provided with a first end portion (11) having a first end surface (11a) as a first measurement reference position, and which electromagnetically measures a first distance (A1) between the first end surface (11a) and the top surface (5a) of the base material (5A) with respect to the measurement axis direction (X),
a second measurer (7) which is provided with a second end portion (12) having a second end surface (12a) as a second measurement reference position, and which electromagnetically measures a second distance (A2) between the second end surface (12a) and the top surface (5a) of the base material (5A) with respect to the measurement axis direction (X), and
a third measurer (8) which is provided with a third end portion (13) having a third end surface (13a) as a third measurement reference position, and which optically measures a third distance (B) between the third end surface (13a) and a top surface (5b) of the covering layer (5B) with respect to the measurement axis direction(X)
are arranged adjacent to each other in a direction (Y) perpendicular to the measurement axis direction (X).

14. The measurement method according to claim 13, wherein the base material (5A) is a metal foil, and the covering layer (5B) is an active substance.
